# EUROPEAN PATENT APPLICATION

(11) **EP 4 676 015 A1**
(43) Date of publication of application: **07.01.2026**
(21) Application number: 25153580.3
(22) Date of filing: 23.01.2025
(51) Int. Cl.: H04N 1/00, H04N 1/32

(54) **IMAGE FORMING APPARATUS**

(30) Priority: 04.07.2024 JP 2024107898
(71) Applicant: FUJIFILM Business Innovation Corp., Minato-ku Tokyo (JP)
(72) Inventor: MITSUHASHI, Tomoyuki, Yokohama-shi, Kanagawa (JP)
(74) Representative: Kurig, Thomas

(57) **Abstract**

An image forming apparatus includes a reception unit that receives abnormality information indicating that an operation of the image forming apparatus is abnormal, a related log extraction unit that extracts related log information, which is predetermined to have a high relevance to the abnormality information received by the reception unit, from log information of the image forming apparatus, a feature extraction unit that extracts a feature by performing pattern matching on the related log information extracted by the related log extraction unit, and an output unit that outputs a log summary generated from the feature extracted by the feature extraction unit.

## Description

### BACKGROUND OF THE INVENTION

### (i) Field of the Invention

The present invention relates to an image forming apparatus.

### (ii) Description of Related Art

For example, JP2009-253564A discloses a log information providing apparatus including log storage means for storing logs generated in a case where an event to be recorded occurs and including at least an identification code for identifying the event, identification code information storage means for storing identification code information in which identification codes of one or a plurality of events are designated, extraction means for extracting, from the log storage means, logs including the identification code designated in the identification code information stored in the identification code information storage means in response to a log acquisition request transmitted, and transmission means for transmitting the extracted logs to a log acquisition request transmission source.

### SUMMARY OF THE INVENTION

In a case where a user contacts a customer service center due to an image forming apparatus not operating normally, the customer service center acquires information necessary for addressing the issue from the user and provides guidance for resolution. However, in a case where the information necessary for addressing the issue cannot be acquired, it is difficult for the customer service center to provide the guidance for resolution based on logs of the image forming apparatus, and the customer service center requests technical support from a technical representative.

Incidentally, even though the information necessary for addressing the issue cannot be acquired from the user, in a case where the customer service center that has received the contact from the user can provide the guidance for resolution, a burden on the technical representative can be reduced.

An object of the present invention is to enable a customer service center contacted by a user to provide guidance for resolution even in a case where it is difficult to acquire information necessary for providing the guidance from the user.

According to a first aspect of the present disclosure, there is provided an image forming apparatus including a reception unit that receives abnormality information indicating that an operation of the image forming apparatus is abnormal, a related log extraction unit that extracts related log information, which is predetermined to have a high relevance to the abnormality information received by the reception unit, from log information of the image forming apparatus, a feature extraction unit that extracts a feature by performing pattern matching on the related log information extracted by the related log extraction unit, and an output unit that outputs a log summary generated from the feature extracted by the feature extraction unit.

According to a second aspect of the present disclosure, in the image forming apparatus according to the first aspect, the reception unit may receive the abnormality information by voice.

According to a third aspect of the present disclosure, in the image forming apparatus according to the second aspect, the voice-based reception may be performed by inputting the voice together with a predetermined signal.

According to a fourth aspect of the present disclosure, in the image forming apparatus according to any one of the first to third aspects, the output unit may output the log summary by voice.

According to a fifth aspect of the present disclosure, in the image forming apparatus according to the first aspect, the reception unit may include a display device configured to receive the abnormality information through selection of a predetermined item.

According to a sixth aspect of the present disclosure, in the image forming apparatus according to the fifth aspect, the display device may constitute a part of the output unit that displays and outputs the log summary.

According to a seventh aspect of the present disclosure, in the image forming apparatus according to any one of the first to sixth aspects, the reception unit may receive the abnormality information without communicating with an outside, and the output unit may output the log summary without communicating with the outside.

According to the first aspect of the present disclosure, it is possible to improve the efficiency of maintenance work as compared with a case where a configuration in which parts that may be used for maintenance of a plurality of predetermined apparatuses are predicted and a person in charge brings the parts in accordance with a prediction result is not adopted.

According to the second aspect of the present disclosure, it is possible to enable the reception by telephone.

According to the third aspect of the present disclosure, it is possible to suppress the occurrence of erroneous voice input as compared with a case where a configuration in which the voice-based reception is performed by inputting the voice together with a predetermined signal is not adopted.

According to the fourth aspect of the present disclosure, it is possible to easily specify a cause of an operation abnormality as compared with a case where a configuration in which the output unit outputs the log summary by voice is not adopted.

According to the fifth aspect of the present disclosure, it is possible to receive the abnormality information more reliably as compared with a case where a configuration in which the reception unit includes the display device configured to receive the abnormality information through the selection of the predetermined item is not adopted.

According to the sixth aspect of the present disclosure, it is possible to reduce the number of parts as compared with a case where a configuration in which the display device constitutes a part of the output unit that displays and outputs the log summary is not adopted.

According to the seventh aspect of the present disclosure, it is possible to improve the efficiency of the maintenance work as compared with a case where the configuration in which parts that may be used for maintenance of a plurality of predetermined apparatuses are predicted and a person in charge brings the parts in accordance with a prediction result is not adopted.

### BRIEF DESCRIPTION OF THE DRAWINGS

Exemplary embodiment(s) of the present invention will be described in detail based on the following figures, wherein:
Fig. 1 is a schematic configuration diagram of an image forming apparatus to which the present exemplary embodiment is applied;
Fig. 2 is a diagram showing a hardware configuration example of the image forming apparatus;
Fig. 3 is a block diagram illustrating functions of the image forming apparatus;
Fig. 4 is a flowchart illustrating a processing procedure in the image forming apparatus;
Figs. 5A to 5D are flowcharts illustrating an application example in which a processing example of Fig. 4 is applied, where Fig. 5A is a first application example, Fig. 5B is a second application example, Fig. 5C is a third application example, and Fig. 5D is a fourth application example;
Fig. 6 is a diagram illustrating a first specific example of the image forming apparatus to which the first application example is applied;
Fig. 7 is a diagram illustrating the first specific example of the image forming apparatus to which the first application example is applied;
Fig. 8 is a diagram illustrating the first specific example of the image forming apparatus to which the first application example is applied; and
Figs. 9A to 9D are diagrams illustrating a second specific example of the image forming apparatus to which the second application example is applied, where Fig. 9A is a screen for selecting a trouble content on an operation panel, and Figs. 9B to 9D are screens for designating details of the selected trouble content.

### DETAILED DESCRIPTION OF THE INVENTION

Hereinafter, an exemplary embodiment of the present disclosure will be described with reference to the accompanying drawings.

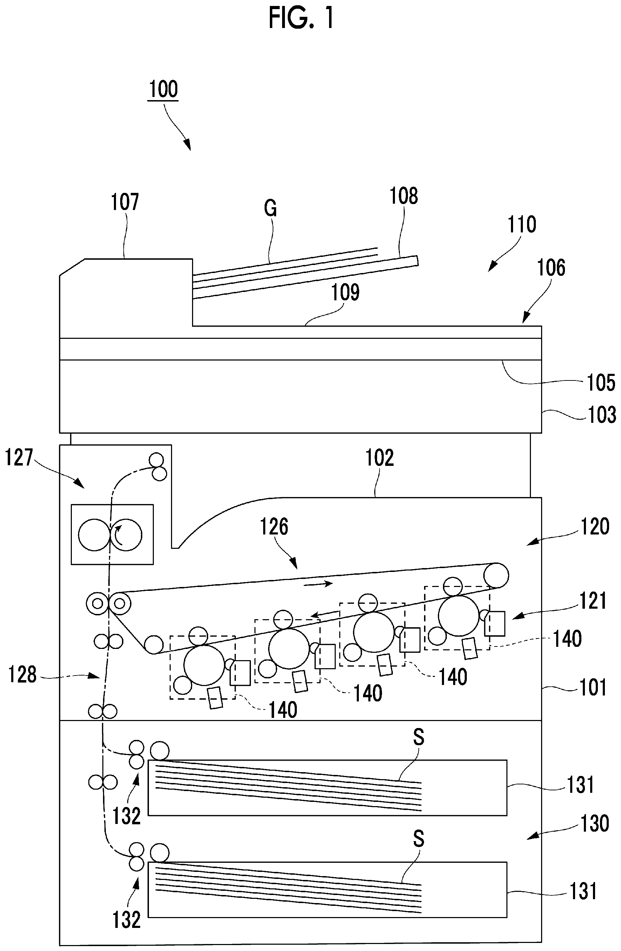

Fig. 1 is a schematic configuration diagram of an image forming apparatus 100.

As shown in Fig. 1, the image forming apparatus 100 includes a document reading device 110 that reads information on a document G and an image forming section 120 that forms an image on a recording sheet S based on the information (read image) on the document read by the document reading device 110. In addition, the image forming apparatus 100 includes a paper feed section 130 that feeds the recording sheet S to be supplied to the image forming section 120. In the image forming apparatus 100, the image forming section 120 and the paper feed section 130 are accommodated in a main body 101, and the document reading device 110 is disposed above the main body 101. The main body 101 includes, on an upper surface portion thereof, a discharge and accommodation section 102 that discharges and accommodates the recording sheet S on which an image is formed.

The document reading device 110 has a housing 103. In addition, the document reading device 110 includes, on an upper surface portion of the housing 103, a light-transmitting document table 105 on which the document G is placed. In addition, the document reading device 110 includes a document cover 106 that covers the document table 105 and that can be opened and closed with respect to the housing 103.

The document cover 106 is provided with an automatic document transport unit 107 that transports the document G to a reading position and that discharges the document G after reading. In addition, the document cover 106 is provided with a document tray 108 on which the document G fed by the automatic document transport unit 107 is mounted. Further, the document cover 106 is provided with an accommodation portion 109 that accommodates the document G discharged from the automatic document transport unit 107.

The image forming section 120 includes image forming units 121 that form toner images of respective colors of yellow (Y), magenta (M), cyan (C), and black (K) by, for example, an electrophotographic method. The image forming section 120 includes an intermediate transfer unit 126 that transports the toner images formed by the image forming units 121 until the toner images are transferred onto the recording sheet S. In addition, the image forming section 120 includes a fixing unit 127 that fixes the toner images transferred from the intermediate transfer unit 126 onto the recording sheet S.

The image forming units 121 include photoreceptor units 140 (shown by a broken line) corresponding to the respective colors. Each of the photoreceptor units 140 is attachable to and detachable from the main body 101, and a user can perform an attachment and detachment operation of the photoreceptor unit 140.

The paper feed section 130 includes a drawer type container 131 capable of mounting a plurality of the recording sheets S of predetermined sizes or types, and a feeding device 132 that feeds the recording sheets S accommodated in the container 131 to a transport path one sheet at a time. A supply transport path 128 through which the recording sheet S fed from the paper feed section 130 is transported to a secondary transfer position is disposed between the paper feed section 130 and the image forming section 120.

### [Hardware Configuration of Image Forming Apparatus 100]

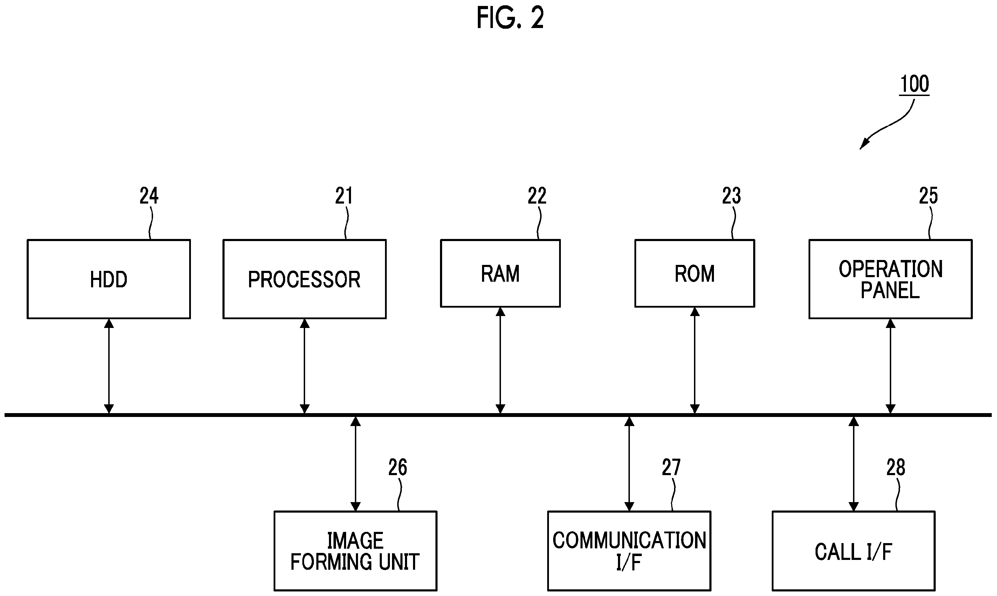

Fig. 2 is a diagram showing a hardware configuration example of the image forming apparatus 100 according to the present exemplary embodiment.

As shown in Fig. 2, the image forming apparatus 100 includes a processor 21, a RAM 22, a ROM 23, an HDD 24, an operation panel 25, an image forming unit 26, a communication I/F 27, and a call I/F 28.

The processor 21 implements processing for printing in the image forming unit 26 by loading various programs stored in the ROM 23 and the like into the RAM 22 and executing the various programs.

The RAM 22 is a memory used as a work memory and the like of the processor 21. The ROM 23 is a memory that stores the various programs and the like executed by the processor 21. The HDD 24 is, for example, a magnetic disk device that stores data and the like used in image formation in the image forming unit 26.

The operation panel 25 is, for example, a touch panel that displays various types of information and that receives operation input from the user, and is a user interface (UI) device. Here, the operation panel 25 consists of a display on which various types of information are displayed and a position detection sheet that detects a position instructed by pointing means such as a finger and a stylus pen. Alternatively, a display and a keyboard may be used instead of the touch panel. The operation panel 25 is an example of a display device.

The image forming unit 26 prints an image on a recording medium such as paper. Here, the image forming unit 26 is, for example, a printer, and uses an electrophotographic method of forming an image by transferring toner attached to a photoreceptor onto a recording medium.

The communication I/F 27 transmits and receives various types of information to and from, for example, a server via a communication line.

The call I/F 28 enables a call between, for example, the user and the customer service center via a telephone line.

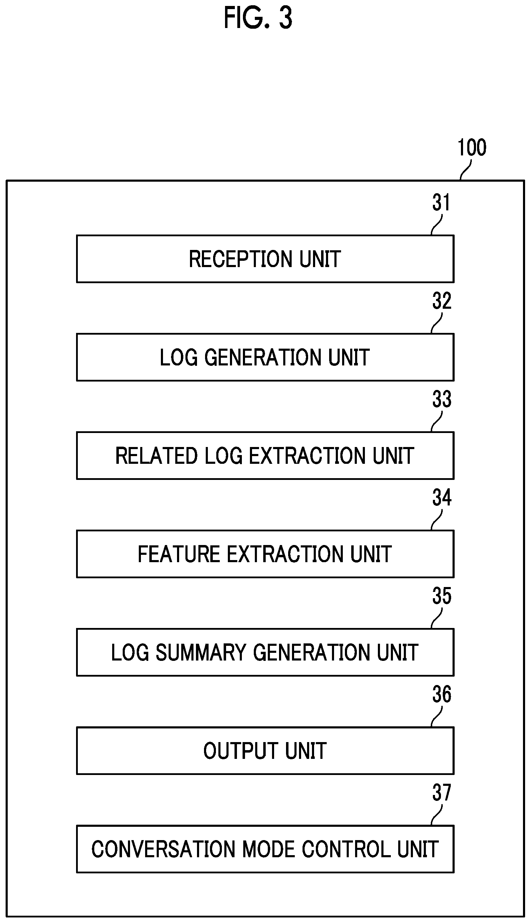

Fig. 3 is a block diagram illustrating functions of the image forming apparatus 100.

As shown in Fig. 3, the image forming apparatus 100 includes a reception unit 31, a log generation unit 32, a related log extraction unit 33, a feature extraction unit 34, a log summary generation unit 35, an output unit 36, and a conversation mode control unit 37.

The reception unit 31 receives abnormality information indicating that an operation of the image forming apparatus 100 is abnormal. The abnormality information is received by input from an outside, for example, by spoken words via the call I/F 28 (see Fig. 2) or by an operation content via the operation panel 25. It is also considered that the abnormality information is received by acquiring information via the communication I/F 27 (see Fig. 2). The reception unit 31 may include the operation panel 25 (see Fig. 2).

The abnormality information referred to here is information indicating that the user is having trouble with the image forming apparatus 100, and is information indicating a content of the actually occurring failure. Examples of the abnormality information include information indicating that the recording sheet S (see Fig. 1) is jammed in the supply transport path 128, that is, that paper jam has occurred.

The log generation unit 32 generates log information indicating an operation status of the image forming apparatus 100. Such log information includes various types of log information of the processor 21, the operation panel 25, the image forming unit 26 (see Fig. 2), and the like. The generated log information is stored in, for example, the HDD 24 (see Fig. 2).

The various types of log information referred to here cannot necessarily be classified into any one of the processor 21, the operation panel 25, the image forming unit 26, or the like, but a case where the log information is classified as an example will be described below.

Examples of the log information of the processor 21 include information indicating a time at which power is turned on/off or power saving is active, and information on a content and time of a job such as a copy mode or a print mode. In a case of the print mode, it is also considered that the log information of the processor 21 includes, for example, information indicating a paper size and a type of the recording sheet S (see Fig. 1) and information indicating whether or not two-sided printing is performed. The information indicating the type referred to here is information indicating whether the type of the recording sheet S is plain paper or thick paper.

In addition, the log information of the processor 21 may include information on an error code and a time at which a failure occurs.

Examples of the log information of the operation panel 25 include information on an operation content and time of the operation panel 25. For example, in a case of the copy mode, it is also considered that the log information of the operation panel 25 includes information indicating a paper size and a type, and information indicating whether two-sided printing is performed. The information indicating the type referred to here is information indicating whether the type of the recording sheet S is plain paper or thick paper.

In a case where the user who operates the operation panel 25 can be specified, it is also considered that information indicating such a user is included in the log information.

Examples of the log information of the image forming unit 26 include information on a content and time of part replacement due to maintenance and information on a content and time of replacement of consumables such as a developer. In addition, the log information of the image forming unit 26 may include information on replenishment of paper into the container 131 (see Fig. 1) of the paper feed section 130 and a time.

The related log extraction unit 33 extracts related log information, which is predetermined to have a high relevance to the abnormality information received by the reception unit 31, from the log information generated by the log generation unit 32. That is, the related log extraction unit 33 specifies, for each predetermined trouble, the log information related to the trouble. The related log extraction unit 33 finds out a trouble occurrence condition and extracts only the log information related to a category matching the condition.

Various extraction methods are considered.

In a case of a rule-based method as one of extraction methods, the related log extraction unit 33 categorizes jobs and machine states, and decides a rule for the log information related to the category. For example, as the categorization, the jobs may be classified into print/copy/scan, the states may be classified into startup/power saving/authentication, and the phenomena may be classified into error code/image quality/abnormal sound/paper jam.

In addition, in a case of data mining and machine learning as another extraction method, past trouble information and log information are used to specify log information that occurs simultaneously as each trouble occurs and to associate the log information with the trouble information. In a case where the trouble actually occurs, only the associated log information is extracted.

The data mining method referred to here is a method of extracting a relevance of data by using Apriori/FP-Growth/Eclat or the like. In addition, the data is clustered to create groups of similar data. As a result, it is specified to which cluster the trouble belongs. Further, CNN/SVM/RandomForest or the like is used as machine learning to extract logs having a high relevance for each trouble.

The feature extraction unit 34 extracts a feature by performing pattern matching on the related log information extracted by the related log extraction unit 33. That is, the feature extraction unit 34 performs pattern matching on the extracted logs having a high trouble relevance.

Various types of pattern matching can be considered.

For example, by focusing on an error code, patterns such as frequently occurring error codes or specific error codes occurring after specific logs are detected.

In addition, by focusing on detection of unique patterns, unique patterns of specific operations or states in a case where the trouble occurs are detected. For example, the case may be a case where a certain pattern of repetitive processing occurs.

Further, by focusing on pattern coordination, deviations in sensor values and setting sin a case where the trouble occurs are detected.

The log summary generation unit 35 generates a log summary from the feature extracted by the feature extraction unit 34. Such a log summary may be in a form of features described in a sentence or listed as items.

The output unit 36 outputs the log summary generated by the log summary generation unit 35. As the output form, a case of reading out the log summary by voice and a case of displaying the log summary are considered. In a case of the voice, a conversation via the call I/F 28 and a speaker (not shown) included in the image forming apparatus 100 are considered.

The output unit 36 is an example of an output unit. In addition, the output unit 36 may include the operation panel 25.

The conversation mode control unit 37 starts or ends control of a conversation mode in a case where a predetermined condition is satisfied. For example, in a case where a detection signal is received through the call I/F 28, the conversation mode control unit 37 starts the control of the conversation mode. In addition, in a case where voice input of "Please let the customer speak" is detected, the conversation mode control unit 37 ends the control of the conversation mode. The voice input can be detected by voice recognition.

The conversation mode referred to here is a mode in which information can be input and output by voice, and, in the present exemplary embodiment, an instruction can be given to the image forming apparatus 100 in spoken words via a telephone conversation from the call I/F 28, and an automated voice response can be received from the image forming apparatus 100.

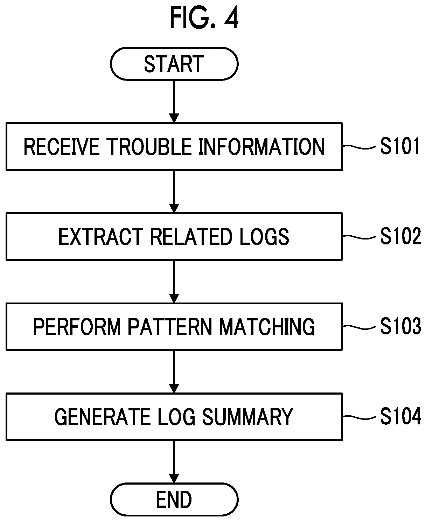

Fig. 4 is a flowchart illustrating a processing procedure in the image forming apparatus 100.

In a processing example shown in Fig. 4, in a case where the reception unit 31 (see Fig. 3) receives the trouble information (step S101), the related log extraction unit 33 extracts the related log information having a high relevance to the trouble information from the log information (step S102). Such log information is generated by the log generation unit 32 (see Fig. 3). The trouble information is an example of the abnormality information indicating that the operation of the image forming apparatus 100 is abnormal.

The feature extraction unit 34 (see Fig. 3) extracts a feature by performing pattern matching on the related log information (step S103). For example, in a case where there is a specific pattern or regularity in the log information in a case where an error occurs, the specific pattern or regularity is extracted as a feature.

The log summary generation unit 35 generates a log summary by using the extracted feature (step S104). The generated log summary is output as information on the trouble information.

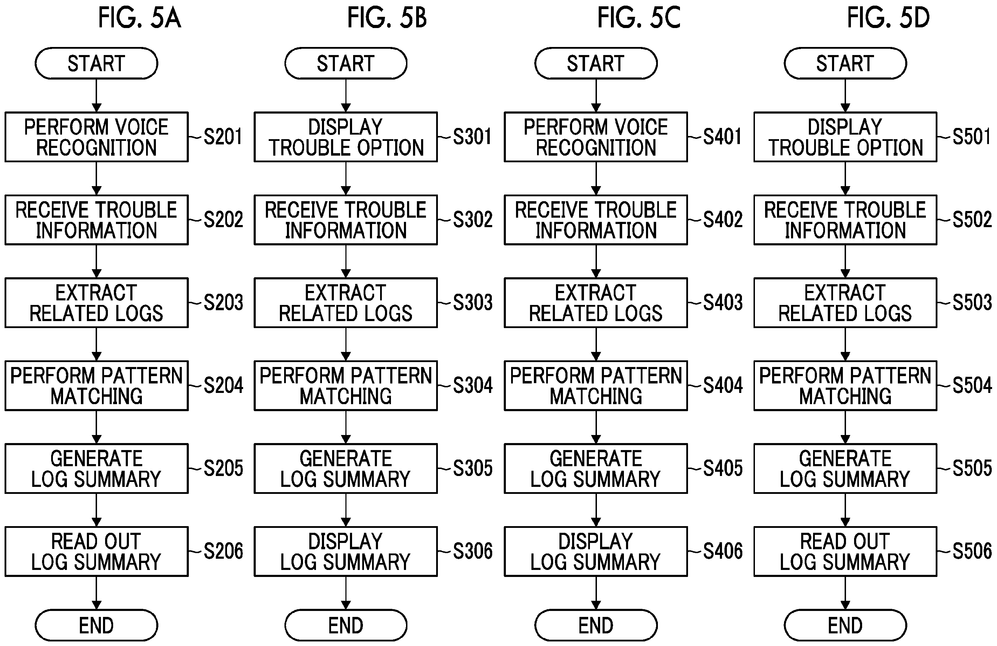

Figs. 5A to 5D are flowcharts illustrating an application example in which the processing example of Fig. 4 is applied, where Fig. 5A is a first application example, Fig. 5B is a second application example, Fig. 5C is a third application example, and Fig. 5D is a fourth application example. Since Figs. 5A to 5D include processes corresponding to steps S101 to S104 in Fig. 4, the description thereof may be omitted.

In the first application example shown in Fig. 5A, voice recognition (step S201) is performed on a conversation content of the call via the call I/F 28, and a content of the trouble is specified. The voice recognition is performed by the reception unit 31 (see Fig. 3).

Such voice recognition allows a content of human speech to be analyzed and converted into text, thereby specifying the content of the trouble. As a result, the reception unit 31 (see Fig. 3) receives the trouble information (step S202). The trouble information is received by the reception unit 31 by voice. For the voice recognition, a known technology or a commonly used technology for converting voice into text can be used.

Steps S202 to S205 in the first application example shown in Fig. 5A correspond to steps S101 to S104 in Fig. 4, so that the description thereof will be omitted.

In a case where the log summary is generated (step S205), the log summary is read out (step S206). The log summary is read out to the other party via the call I/F 28 (see Fig. 2). That is, the log summary is read out over the telephone. As a result, the other party of the telephone can acquire additional information for addressing the trouble, making it easier to specify a cause of the trouble. The first application example is a case where the call I/F 28 (see Fig. 2) is the output unit 36 (see Fig. 3).

In the first application example, the log summary can be heard by telephone even in a case where the image forming apparatus 100 is not connected to a network, so that it is possible to accommodate a wide range of installation environments of the image forming apparatus 100 for the user.

In the first application example, an aspect is adopted in which the log summary is conveyed to the other party via the call I/F 28 (see Fig. 2), but the present disclosure is not limited to this, and an aspect may be adopted in which the log summary is conveyed to the other party via the communication I/F 27 (see Fig. 2).

In the second application example shown in Fig. 5B, trouble options are displayed on the operation panel 25 (see Fig. 2) (step S301). The trouble options are displayed by the reception unit 31 (see Fig. 3).

The user operates the operation panel 25 (see Fig. 2) to input the trouble content recognized by the user while viewing the display of the trouble options. As a result, the reception unit 31 (see Fig. 3) receives the trouble information (step S302).

Steps S302 to S305 in the second application example shown in Fig. 5B correspond to steps S101 to S104 in Fig. 4, so that the description thereof will be omitted.

In a case where the log summary is generated (step S305), the log summary is displayed on the operation panel 25 (see Fig. 2) (step S306), and the user can check the log summary. As a result, the user can acquire additional information for addressing the trouble, making it easier to specify a cause of the trouble. In addition to a case where the user inputs the trouble content on the operation panel 25 (see Fig. 2) and checks the display of the log summary, a case is also considered in which a worker in charge of the maintenance work of the image forming apparatus 100 (see Fig. 1) visits the user's premises and performs the maintenance work. The worker referred to here is a technical representative.

The second application example is a case where the operation panel 25 (see Fig. 2) is the output unit 36 (see Fig. 3). That is, the operation panel 25 displays and outputs the log summary.

In the second application example, an aspect is adopted in which the trouble content is input via the operation panel 25 (see Fig. 2), but the present disclosure is not limited to this, and an aspect may be adopted in which the trouble content is input via the communication I/F 27 (see Fig. 2).

In the third application example shown in Fig. 5C, voice recognition (step S401) is performed on the conversation content of the call via the call I/F 28, and the trouble content is input. In a case where the log summary is generated (step S405), the log summary is displayed on the operation panel 25 (see Fig. 2) (step S406). Steps S402 to S405 correspond to steps S101 to S104 in Fig. 4, so that the description thereof will be omitted.

The third application example is a case where the operation panel 25 (see Fig. 2) is the output unit 36 (see Fig. 3).

In the fourth application example shown in Fig. 5D, the trouble options are displayed on the operation panel 25 (see Fig. 2) (step S501), and the trouble content is input. In a case where the log summary is generated (step S505), the log summary is read out over the telephone (step S506). Steps S502 to S505 correspond to steps S101 to S104 in Fig. 4, so that the description thereof will be omitted.

The fourth application example is a case where the call I/F 28 (see Fig. 2) is the output unit 36 (see Fig. 3).

Next, a specific example of the image forming apparatus 100 according to the above application examples will be described.

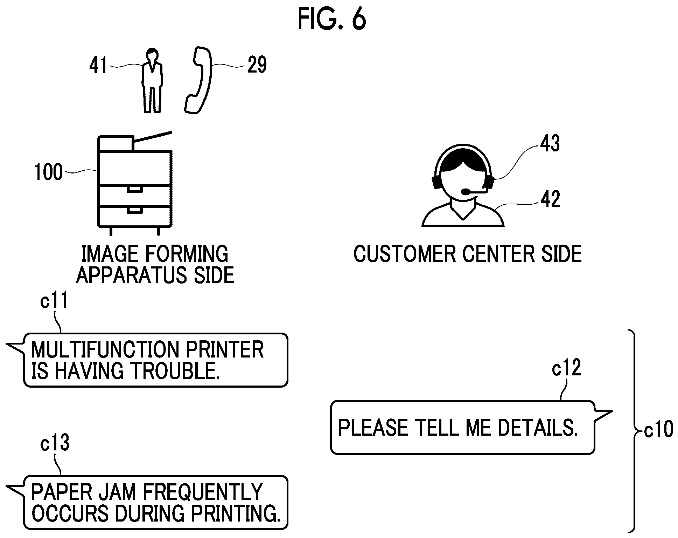

Figs. 6, 7, and 8 are diagrams illustrating a first specific example of the image forming apparatus 100 to which the first application example is applied. Figs. 6, 7, and 8 show the first specific example in order, in which a left side of each figure is a side of an image forming apparatus where the trouble has occurred, and a right side is a side of a customer center that addresses the trouble. In each figure, a time sequence is shown from top to bottom. The customer center referred to here is a customer service center.

In the first specific example, as shown in Fig. 6, a user 41 calls the customer center using a receiver 29 of the image forming apparatus 100, and the user 41 speaks, "A multifunction printer is having trouble", (c11) and conveys a first incident to an operator 42 of the customer center. The receiver 29 corresponds to the call I/F 28 (see Fig. 2).

In response to this, the operator 42 answers, "Please tell me the details", via a headset 43 (c12) and tries to grasp what kind of trouble needs to be addressed.

The user 41 explains, "Paper jam frequently occurs during printing", (c13) and conveys the specific trouble content.

The above-described communication (c11 to c13) shown in Fig. 6 is a general conversation (c10) between the user 41 and the operator 42 in a case where the user calls the customer center.

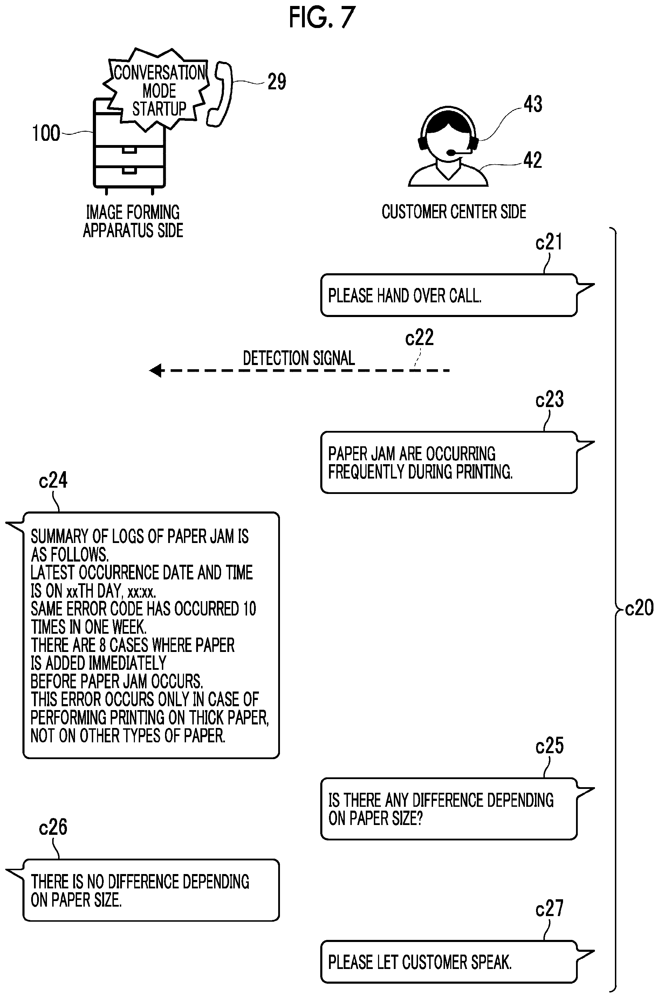

Next, as shown in Fig. 7, the operator 42 makes a request to the user 41 via the headset 43, "Please hand over the call" (c21). The user 41 hears the request with the receiver 29. As described above, the operator 42 informs the user 41 that the call with the user 41 is temporarily ended in order to give a direct instruction to the image forming apparatus 100.

Then, the operator 42 transmits a detection signal from a phone (c22). Such a detection signal is for switching the image forming apparatus 100 to the conversation mode. In a case where the image forming apparatus 100 receives the detection signal via the call I/F 28, the conversation mode control unit 37 (see Fig. 3) starts the control of the conversation mode. As a result, on the customer center side, information for grasping the trouble can be collected (c20).

It is considered that the conversation mode is ended in a case where a signal for ending the conversation mode is received.

The operator 42 conveys a message by telephone, "Paper jam are occurring frequently during printing", in a form of superimposing the message on an instruction signal (c23). As a result, the image forming apparatus 100 receives the trouble information through voice recognition (see steps S201 and S202 in Fig. 5A). The instruction signal referred to here is for the image forming apparatus 100 to have a conversation with the operator 42. As a result, the image forming apparatus 100 does not respond to the speech of the user 41 to which no instruction signal is transmitted, while responding to the conversation with the operator 42.

In a case where the abnormality information is received by voice in the image forming apparatus 100, voice is input together with an instruction signal. The instruction signal referred to herein is an example of a predetermined signal.

The image forming apparatus 100 reads out the generated log summary (see step S206 in Fig. 5A). That is, a content, "A summary of logs of paper jam is as follows, the latest occurrence date and time is on xxth day, xx:xx, the same error code has occurred 10 times in one week, there are 8 cases where paper is added immediately before the paper jam occurs, and this error occurs only in a case of performing printing on thick paper, not on other types of paper", is read out (c24).

As described above, the log summary is output by voice.

On the other hand, in a case where the operator 42 further asks, "Is there any difference depending on the paper size?", in a form of superimposing the instruction signal (c25), the image forming apparatus 100 makes a response, "There is no difference depending on the paper size", (c26).

The operator 42 can narrow down the cause by communicating with the image forming apparatus 100 by telephone. In addition, additional information can be acquired in addition to the information from the user 41. Therefore, it is possible to bring a maintenance part that is likely to be needed to resolve the trouble in a case of visiting a location of the image forming apparatus 100. It is possible to omit a second visit to the place of the user 41, thereby reducing man-hours of a maintenance worker. In addition, it is possible to reduce a burden on the user 41 to explain the trouble content.

Then, the operator 42 gives an instruction of "Please let the customer speak" to the image forming apparatus 100 in a form of superimposing the instruction signal (c27).

In the above example, the conversation mode is started and ended by the signal from the operator 42, but the present disclosure is not limited to this. For example, in the image forming apparatus 100, in a case where the spoken words, "Please hand over the call" (c21), are recognized by voice via the call I/F 28, the conversation mode control unit 37 (see Fig. 3) starts the control of the conversation mode. In addition, in a case where the spoken words, "Please let the customer speak" (c27), are recognized by voice, the conversation mode control unit 37 (see Fig. 3) ends the control of the conversation mode.

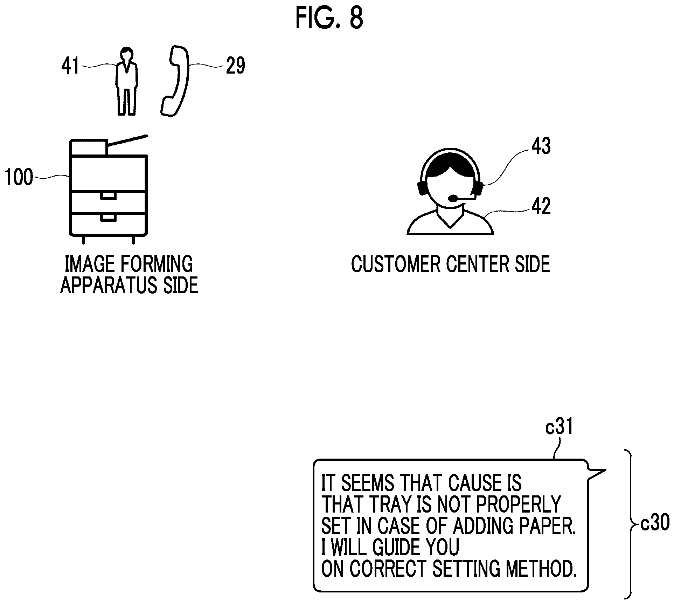

Next, as shown in Fig. 8, the operator 42 of the customer center informs the user 41 of the result of the cause specification or of the dispatch of the maintenance worker (c30). That is, the operator 42 explains to the user 41, "It seems that the cause is that the tray is not properly set in a case of adding the paper, and I will guide you on the correct setting method" (c31). It is expected that the trouble will be resolved at the stage of receiving the call in a case where the user 41 performs the setting method as guided. In addition, in a case where the user 41 wants to dispatch the maintenance worker, the operator 42 arranges for the maintenance worker.

In this way, the trouble with the image forming apparatus 100 is addressed.

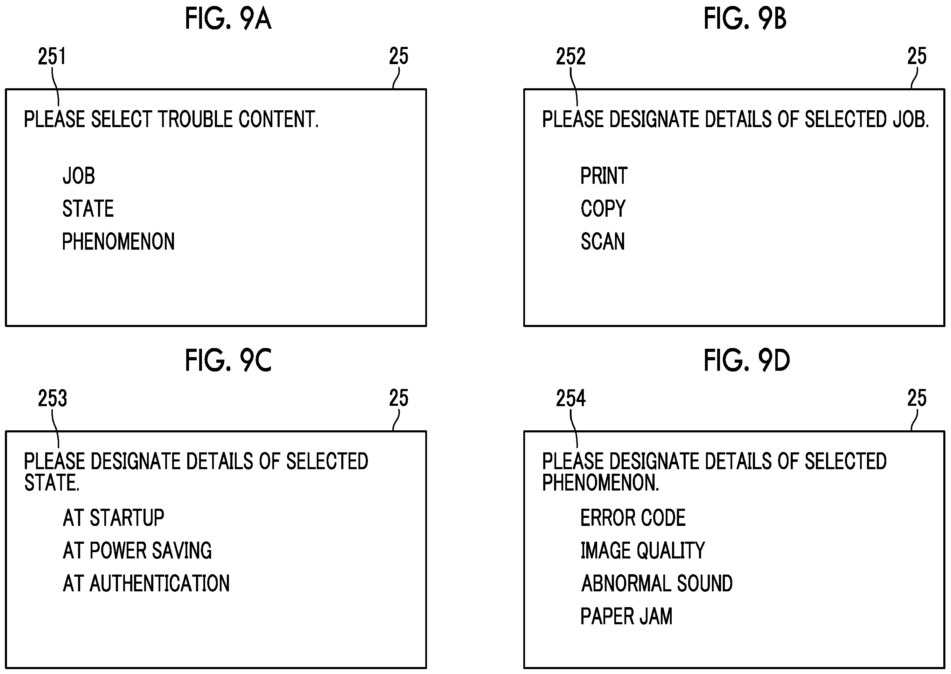

Figs. 9A to 9D are diagrams illustrating a second specific example of the image forming apparatus 100 to which the second application example is applied, where Fig. 9A is a screen for selecting a trouble content on the operation panel 25, and Figs. 9B to 9D are screens for designating details of the selected trouble content. Display of the trouble option on the operation panel 25 (see step S301 or step S501 in Fig. 5) is shown.

The operation panel 25 may include a display panel composed of a liquid crystal display or the like, and a physical key pressed by the user in a case of selecting an item on the display panel, in addition to a touch panel having a function of detecting a position touched by the user.

In the second specific example of Figs. 9A to 9D, a screen 251 shown in Fig. 9A displays, "Please select the trouble content", and includes items of "job", "state", and "phenomenon" as options. In a case where any item is selected on the screen 251, a transition is made to the next screen.

A screen 252 shown in Fig. 9B is a screen to which the transition is made in a case where "job" is selected on the screen 251. The screen 252 displays, "Please designate the details of the selected job", and includes three items of "print", "copy", and "scan".

The user selects any item on the screen 252 to notify the image forming apparatus 100 of the trouble content.

A screen 253 shown in Fig. 9C is a screen to which the transition is made in a case where "state" is selected on the screen 251. The screen 253 displays, "Please designate the details of the selected state", and includes three items of "at startup", "at power saving", and "at authentication".

A screen 254 shown in Fig. 9D is a screen to which the transition is made in a case where "phenomenon" is selected on the screen 251. The screen 254 displays, "Please designate the details of the selected phenomenon", and includes four items of "error code", "image quality", "abnormal sound", and "paper jam".

In this way, the image forming apparatus 100 receives the trouble information even by displaying the options of the trouble content on the operation panel 25 (see step S301 or step S501 in Fig. 5). The operation panel 25 can receive the trouble information by selecting a predetermined item. The reception unit 31 includes the operation panel 25.

Such display of the options includes a plurality of major items (see Fig. 9A) and a plurality of sub-items branched from each major item (see Figs. 9B to 9D).

The image forming apparatus 100 according to the present exemplary embodiment receives the trouble information without communicating with the outside, and outputs the log summary. Therefore, it is possible to acquire the information necessary for the maintenance from the image forming apparatus 100 that is not connected to the network. In addition, the operation of the image forming apparatus 100 is performed in accordance with the instruction from the customer center side, so that additional information necessary for the maintenance is acquired. Further, by acquiring information from the image forming apparatus 100 in a form of the log summary, the probability of specifying the cause with minimal communication is increased.

### <Supplementary Note>

(((1))) An image forming apparatus comprising:
   a reception unit that receives abnormality information indicating that an operation of the image forming apparatus is abnormal;
   a related log extraction unit that extracts related log information, which is predetermined to have a high relevance to the abnormality information received by the reception unit, from log information of the image forming apparatus;
   a feature extraction unit that extracts a feature by performing pattern matching on the related log information extracted by the related log extraction unit; and
   an output unit that outputs a log summary generated from the feature extracted by the feature extraction unit.
(((2))) The image forming apparatus according to (((1))),
   wherein the reception unit receives the abnormality information by voice.
(((3))) The image forming apparatus according to (((2))),
   wherein the voice-based reception is performed by inputting the voice together with a predetermined signal.
(((4))) The image forming apparatus according to any one of (((1))) to (((3))),
   wherein the output unit outputs the log summary by voice.
(((5))) The image forming apparatus according to (((1))),
   wherein the reception unit includes a display device configured to receive the abnormality information through selection of a predetermined item.
(((6))) The image forming apparatus according to (((5))),
   wherein the display device constitutes a part of the output unit that displays and outputs the log summary.
(((7))) The image forming apparatus according to any one of (((1))) to (((6))),
   wherein the reception unit receives the abnormality information without communicating with an outside, and
   the output unit outputs the log summary without communicating with the outside.

According to (((1))), it is possible to improve the efficiency of maintenance work as compared with a case where a configuration in which parts that may be used for maintenance of a plurality of predetermined apparatuses are predicted and a person in charge brings the parts in accordance with a prediction result is not adopted.

According to (((2))), it is possible to enable the reception by telephone.

According to (((3))), it is possible to suppress the occurrence of erroneous voice input as compared with a case where a configuration in which the voice-based reception is performed by inputting the voice together with a predetermined signal is not adopted.

According to (((4))), it is possible to easily specify a cause of an operation abnormality as compared with a case where a configuration in which the output unit outputs the log summary by voice is not adopted.

According to (((5))), it is possible to receive the abnormality information more reliably as compared with a case where a configuration in which the reception unit includes the display device configured to receive the abnormality information through the selection of the predetermined item is not adopted.

According to (((6))), it is possible to reduce the number of parts as compared with a case where a configuration in which the display device constitutes a part of the output unit that displays and outputs the log summary is not adopted.

According to (((7))), it is possible to improve the efficiency of the maintenance work as compared with a case where the configuration in which parts that may be used for maintenance of a plurality of predetermined apparatuses are predicted and a person in charge brings the parts in accordance with a prediction result is not adopted.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

31: reception unit
32: log generation unit
33: related log extraction unit
34: feature extraction unit
35: log summary generation unit
36: output unit
100: image forming apparatus

## Claims

1. An image forming apparatus comprising:
a reception unit that receives abnormality information indicating that an operation of the image forming apparatus is abnormal;
a related log extraction unit that extracts related log information, which is predetermined to have a high relevance to the abnormality information received by the reception unit, from log information of the image forming apparatus;
a feature extraction unit that extracts a feature by performing pattern matching on the related log information extracted by the related log extraction unit; and
an output unit that outputs a log summary generated from the feature extracted by the feature extraction unit.

2. The image forming apparatus according to claim 1,
wherein the reception unit receives the abnormality information by voice.

3. The image forming apparatus according to claim 2,
wherein the voice-based reception is performed by inputting the voice together with a predetermined signal.

4. The image forming apparatus according to any one of claims 1 to 3,
wherein the output unit outputs the log summary by voice.

5. The image forming apparatus according to claim 1,
wherein the reception unit includes a display device configured to receive the abnormality information through selection of a predetermined item.

6. The image forming apparatus according to claim 5,
wherein the display device constitutes a part of the output unit that displays and outputs the log summary.

7. The image forming apparatus according to any one of claims 1 to 6,
wherein the reception unit receives the abnormality information without communicating with an outside, and
the output unit outputs the log summary without communicating with the outside.
